# EUROPEAN PATENT APPLICATION

(11) **EP 3 981 259 A1**
(43) Date of publication of application: **13.04.2022**
(21) Application number: 21155373.0
(22) Date of filing: 05.02.2021
(51) Int. Cl.: A23C 20/02, A23L 11/45

(54) **PLANT-BASED SUBSTITUTE OF HOT MELTING AND STRETCHING CHEESE AND METHOD FOR ITS PREPARATION**

(30) Priority: 06.10.2020 IT 202000023518
(71) Applicant: Vegandelicious Srl, 00191 Roma (IT)
(72) Inventor: Martella, Sauro, 00191 Roma (IT)
(74) Representative: Leganza, Alessandro

(57) **Abstract**

The present invention pertains to a plant-based substitute of cheese, in particular, to a substitute of cheese characterized by the fact that it melts and stretches at high temperature and an efficient method for its preparation. Such vegan cheese is characterized by the presence of the combination of waxy maize starch and tapioca starch in appropriate amounts.

## Description

### Field of the Invention

The present invention pertains to a plant-based substitute of cheese, in particular, to a substitute of cheese that melts and stretches at high temperature and an efficient method for its preparation.

### State of the art

Traditional production of cheeses has always been carried out using animal milk as the main ingredient. In recent years the spread of a greater ecological awareness combined with the increasingly feeling of empathy towards animals, as well as the search for a healthier diet, therefore free of animal fats, has seen the reaching the market and getting the satisfaction of consumers of different vegetable substitutes for classic cheese. However, these substitutes are characterized by a different structure, which gives them a different appearance, and by the lack of organoleptic qualities, to the point of making them in any way not comparable to traditional cheeses neither in taste, nor in texture, i.e. structure, nor in appearance.

Not all cheeses of animal origin can stretch. In order to do it they must have been manufactured with curd, like the large majority of cheeses, that is under alkaline conditions and without acid coagulation. For this reason goat cheeses do not melt: because they are produced by acid coagulation. The same thing happens with mascarpone, which is acidified cream.

In addition, in order to melt and stretch the cheeses of animal origin, such as those for toast, melting salts like sodium citrate, polyphosphates, diphosphates, sodium phosphates are added; they are all melting salts used to keep the aqueous and oily parts of cheese together, so that it keeps soft and "meltable".

The few proposal of plant-based substitutes for existing cheeses related to the imitation of pizza cheeses, are manufactured with formulas and methods which fails to obtain appreciable results in terms of texture and stretch, i.e. the ability to form strands at high temperature (stretching), as they simply tend to merge without generating any filamentous structure at high temperature similar to that of traditional mozzarella made with ingredients of animal origin, with the result that they are not comparable with the original milk-based product because more gelatinous, creamy, oily or floury, in no case truly referable to the original stringy dairy product.

### Summary of the invention

The problem addressed by the present invention is therefore to provide a plant-based substitute of hot melting and stretching cheese, i.e. with the same plasticity characteristics, the same hot melting and strands forming behavior, as the corresponding typical animal milk-based products.

The present invention addresses and solves these aspects thanks to the mixture of ingredients used and the production procedures. Through the present invention it is possible to obtain a plant-based substitute for melting and highly stretching cheese in a short time, absolutely comparable to the reference of animal origin.

The present invention addresses and solves this problem imitating a wide range of soft cheeses in the best possible way in particular as regards the potential to be "stringy" if heated or at high temperature (such as those in kitchen or pizza ovens) (such as mozzarella and all the existing variants e all other dairy products characterized by a structure that if subject to high temperatures melts, and furthermore generates a structure resembling the casein matrix to the point of producing the typical "strand" on pizza or in fillings).

The present invention, thanks to the innovative formulation and method, allows plant-based cheeses or plant-based substitutes for cheese of the kind of completely plant-based (vegan) stretched-curd cheese (like mozzarella) to be provided.

All without any addition of gluten, without addition of non-natural ingredients, such as flavorings or the aforementioned melting salts, characterizing the product with what is commonly called "clean label".

In addition the plant-based substitute for cheese of the invention is weakly acid (pH between 4 and 5) therefore more compatible with the acidity in stomach in contrast with acidic pH of hot melting and stretching cheeses of animal origin.

In fact, the present invention allows to produce plant-based cheeses with the following characteristics: Clean label, vegan, gluten-free, biological and above all very stretchy, i.e. form strands if they have undergone heat treatment.

This innovation is also characterized by the use of simple and economical ingredients and a simple and fast preparing process, therefore with very high characteristic of cost-effectiveness.

The main characteristic of the invention is to use as a basis, a specific mixture of starches in appropriate proportions.

In fact, formula and method could be modified to obtain more or less stretchy doughs, more or less creamy, more or less resistant to surface heat from wood-fired ovens, more or less soft and creamy at room temperature to allow its cold consumption (for example in tramezzini). Another important aspect is that the invention allows to produce, package and distribute the product within 24 hours from the beginning of the production, providing an economic saving and a huge logistic simplification.

In addition, as a further problem, there is the need to provide a method for the preparation of plant-based substitutes of hot melting and stretching cheeses without long and expensive processing and ripening phases.

In addition, the method of the present invention provides advantageously the preparation of plant-based cheeses without any use of gluten, and thus allowing the production of gluten-free plant-based cheeses. Additionally, plant-based cheeses do not contain any ingredients of animal origin.

Therefore, the present invention solves the above mentioned problems, by means the product and the method as outlined in the annexed claims, the definitions of which are an integral part of the description, allowing to produce plant-based substitutes for melting and stretching cheeses, characterized by a structure capable of hot melting and stretching, that is to have the same heat behavior as the corresponding traditional cheeses, without requiring the long stage of processing and ripening and, moreover, preferably, without gluten, i.e. gluten-free.

This invention uses simple and economical ingredients, a simple and very fast preparing process, without the ripening phase, therefore it is particularly advantageous in terms of cost-effectiveness for application especially on a large industrial scale.

Another object is a plant-based substitute of hot melting and stretching cheese, which can be obtained from this method.

Another object is a plant-based substitute of hot melting and stretching cheese, which can be obtained also from the aforementioned method, which is gluten-free, i.e. comprising 0,001-20 ppm of gluten.

Further characteristics and advantages of the plant-based substitute of hot melting and stretching cheese and the method for its preparation will result from the description of the examples about the production of the invention, provided as an indication of the invention.

### Brief description of the figures

Figure 1 e 2 show plant-based substitute for cheese of the invention on cooked pizza, which hot, as well as being melted, stretches and turns out to be even more stretching than traditional mozzarella.
Figure 3 shows the plant-based substitute for cheese of the invention, sliced for consumption as "Caprese".
Figure 4 shows the plant-based substitute for cheese of the invention, in a form of "pizza dough" realization.

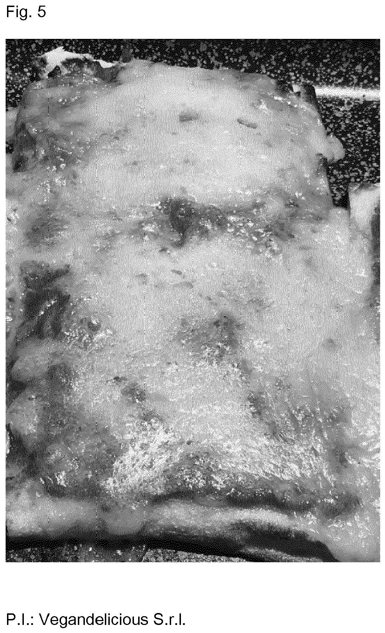

Figure 5 shows the plant-based substitute for cheese of the invention, in a form of melted state on classic sliced pizza realization.

### Detailed description of the invention

Object of the present invention is plant-based cheese or a plant-based substitute of hot melting and stretching cheese comprising:
10 to 50 wt.% waxy maize starch,
0,5 to 10 wt.% tapioca starch,
30 to 65 wt.% plant milk.

It has been surprisingly found that the combination of appropriate amounts of waxy maize starch and tapioca starch gives to plant-based substitutes for cheese the same melting and stretching characteristics, when stretched, as the corresponding typical animal milk products.

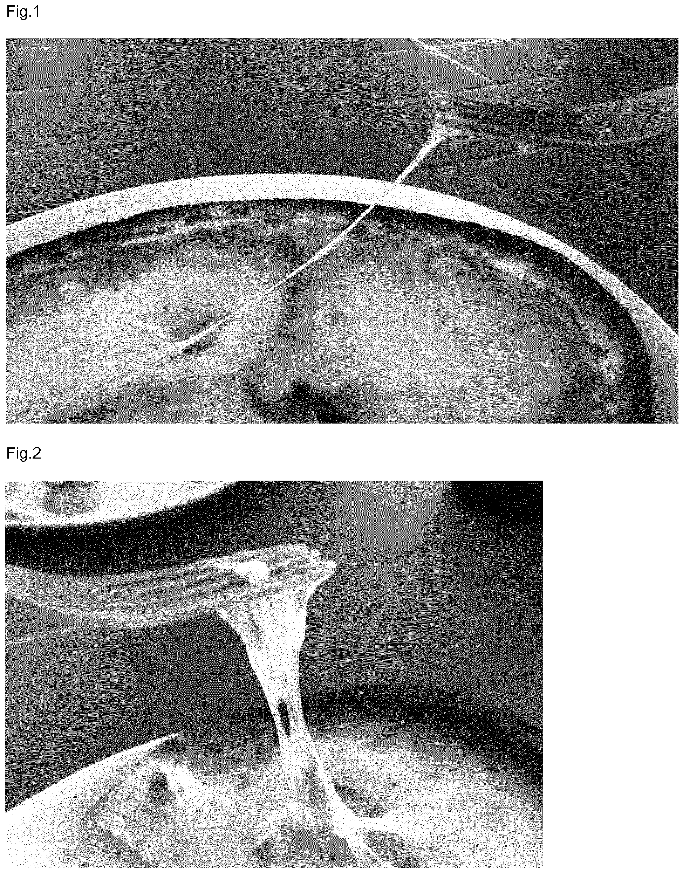

Formation of strands (see Fig. 1 and 2) is what characterizes melt animal derived cheeses such as hot melted mozzarella or other hot melting cheeses such as hot melted Tosella.

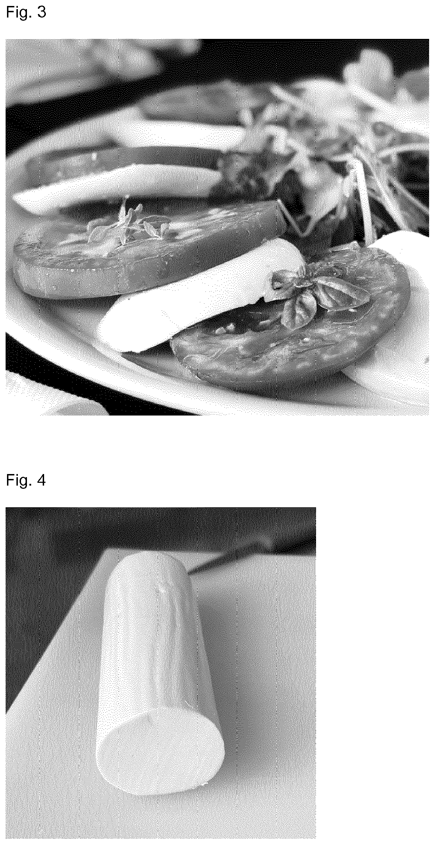

It is the combination of the appropriate amount of waxy maize starch and tapioca starch that provides the effect of "stretching", typical effect of some corresponding traditional melted cheeses. This effect is evident from the examination of Fig. 1, 2, and 3.

Thus, waxy maize starch and tapioca starch in appropriate amounts allow both the preparation of plant-based cheeses or plant-based substitutes of hot melting and stretching cheeses and the same appearance, i.e. appearance of corresponding traditional cheeses and also the same traction behavior giving rise to strands of melted plant-based cheese, thus improving consumer interest.

In fact, in the absence of tapioca starch, the plant-base substitute for cheese loses "the strand", i.e. the stretching property or forming strands when pulled in in presence of high moisture (for example in fillings where, unlike pizza ovens with a dry environment, cooking takes place practically in the liquid vaporizes into steam) to become instead a "creamier" product. In addition, in the absence of tapioca starch the product remains attached to the palate, while both of these defects are eliminated by the presence of such amounts of tapioca starch.

Tapioca starch used in the above quantities and proportions ensures the maintenance of the stringy effect even when the product is cooked in the presence of a lot of moisture.

Object of the present invention is therefore a plant-based substitute for melting and stretching cheese and the method for its preparation.

The term plant-based substitute or plant-based substitute of hot melting and stretching cheese therefore refers to plant-based products substitutes for traditional cheeses which are made up of substances of animal origin, such as milk and milk derivatives.

The term plant-based substitute of hot melting and stretching cheese therefore includes plant-based substitutes for cheese and therefore plant-based mozzarella, small fresh plant-based mozzarella balls cheese, plant-based mozzarella packed for pizza or packaged mozzarella, plant-based scamorza, plant-based "tied scamorza", etc.

The term plant-based substitute for cheese can also be shortened by the term vegetable substitute for cheese, or plant-based cheese, or vegetable cheese.

The term plant-based substitute for cheese therefore includes plant-based products that imitate in the best possible way, for example, the typical cheese but without ingredients of animal origin.

According to a preferred form of production, the plant-based substitute of hot melting and stretching cheese is gluten-free.

According to a preferred form of production, the plant-based substitute of hot melting and stretching cheese is free of ingredients of animal origin, therefore it is a so-called vegan product.

According to a preferred form of production, the plant-based substitute of hot melting and stretching cheese includes only plant-based ingredients, and according to a much preferred form of production, the plant-based substitute of hot melting and stretching cheese includes only plant-based ingredients.

The plant-based substitute of hot melting and stretching cheese is a plant-based cheese substitute of hot melting and stretching cheese.

The term hot refers to a temperature from 35°C to 800°C, preferably from 35°C to 500°C, more preferably from 40°C to 90°C, even more preferably from 40°C to 60°C, or even better from 45°C to 55°C. For example, pizza or fillings are served from 40°C to 60°C, preferably from 45°C to 55°C because at such temperature they maintain the characteristic of melting and stretching.

Waxy maize starch, o WMS, from the English *Waxy Maize Starch,* is a type of maize starch of Chinese origin. The name "waxy" refers to the fact that under the microscope a similarity with the structure of the wax is visible.

Waxy maize starch has the main characteristic of being composed by 98 to 100 wt.% amylopectin, the fraction of starch with branched structure usually present on average at 75 wt.% in classical starch and easy to digest.

Some studies report a 100% amylopectin content in waxy maize starch.

According to a form of production, waxy maize starch includes amylopectin 98 to 99.9 wt.%.

Amylopectin is a glucose polymer, consisting of the α-D-glucose.

In amylopectin, monomer glucose units are linearly bound by α(1→4)type; ramifications occur with α(1→6) bonds, every 24-30 units of glucose. In amylopectin, the number of present glucose molecules can range from 2,000 to 200,000.

Waxy maize starch is widely commercially available, also on the Internet, for example at Sigma-Aldrich with CAS RN 9005-25-8 and product number n. S9679, too.

Tapioca starch is a widely commercially available product, even at large supermarkets or at Farabella^{®}, Graziano^{®}, Mulino Rossetto^{®}, etc.

Tapioca starch can be replaced by starch with equivalent characteristics, i.e. provides equivalent characteristics in the plant-based substitute of hot melting and stretching cheese.

Vegetable milk is an aqueous mixture of cashew flour or flour from other dried fruits or legumes, preferably cashew flour or similar and water.

The percentages of the components mentioned in the text of the present invention refer to percentages weight by weight, i.e. for the latter the total weight of the plant-based substitute for cheese product.

According to a preferred form of production, the plant-based substitute of hot melting and stretching cheese, includes:
10 to 38 wt.% waxy maize starch,
0,5 to 5 wt.% tapioca starch,
30 to 65 wt.% plant milk.

According to a much preferred form of production, the plant-based substitute of hot melting and stretching cheese, includes:
15 to 30 wt.% waxy maize starch,
1 to 5 wt.% tapioca starch,
35 to 60 wt.% plant milk.

According to a much preferred form of production, the plant-based substitute of hot melting and stretching cheese, also includes one or more of the following ingredients:
- 2 to 16 wt.% fruit juice,
- 0,5 to 2 wt.% salt,
- 0,1 to 1 wt.% onion powder,
- 12 to 26 wt.% seed oil.
- lactic acid enough to obtain a final pH of about 4,4.

Fruit juice can be pear juice, apple juice or other fruit juice that can confer sweet aromatic notes such as banana juice, mixed fruit juice. Fruit juice is preferably pear juice.

According to a preferred form of production, the plant-based substitute of hot melting and stretching cheese, also comprising one or more of the following ingredients: potato starch, maize starch, rice starch, proteins, yeast flakes, dried fruit, olive oil.

Another object is a method for the preparation of a plant-based substitute of hot melting and stretching cheese comprising the following steps:
A) fill a suitable container with 30 to 65 wt.% of plant milk,
B) add under stirring the following ingredients:
   2 to 16 wt.% fruit juice,
   0,5 to 2 wt.% salt,
   0,1 to 1 wt.% onion powder,
   lactic acid enough to obtain a final pH of about 4,4,
   10 to 50 wt.% waxy maize starch,
   0,5 to 10 wt.% tapioca starch,
   12 to 26 wt.% seed oil;
C) mix to achieve an homogenous mixture,
D) put the mixture from step C) in a cooking machine/mixer and heat at a temperature of 60°C to 90°C,
E) keeping the temperature reached in step D) mixing at a number of revolutions between 500 and 4000 RPM for 5 to 30 minutes,
F) fill the inside of molds and casings with the homogeneous dough of step E) and reduce the temperature of the product ad at a temperature of between -40°C and 10°C.

According to a much preferred form of production, in the method for the preparation of the plant-based substitute of hot melting and stretching cheese, in step A) plant-milk is prepared according the following steps:
a1) prepare a mixture comprising:
   70 to 95 wt.% water,
   7 to 30% wt.% cashew or dried fruit or legumes flour,
b1) emulsify by blending and cooking the product at low temperature until a mixture similar in appearance to animal milk is obtained.

According to a much preferred form of production, in step D) the temperature is between 60°C and 70°C.

According to a much preferred form of production, in step E) mixing is carried out at a number of revolutions between 500 and 3000 RPM and/or for 10 to 20 minutes.

In step A) plant-milk can be prepared, e.g. cashew milk or other dried fruit and/or legumes, etc. mixing the ingredients on the basis of the type of technical behavior that you want to obtain from the finished product (elasticity, creaminess, stretching, etc.) both cold and hot, using on average a percentage of water from 70% to 95% with additional down and upwards tolerances determined by the type of product you want to obtain. The cashew flour is added to the water (or blended pulp of previously soaked cashews) or other dried fruits (or legumes) in a percentage 7 to 30 wt.%, if you want to strongly characterize the product from the specific ingredient. The product is emulsified by blending and cooking at low temperature until you get a real "plant-based milk" that can be filtered or used as a full cream depending on the texture and the more or less white color that you want to obtain in the finished product.

In step B) a part of vegetable milk from 30 to 65 wt.% is mixed with fruit juice, preferably of pear (or other alternative fruit) as a percentage of 2 to 16%, salt as a percentage of 0.5 to 2%, onion powder as a percentage of 0,10 to 1%, lactic acid as a percentage to obtain a pH equal to 4.4 with slight tolerances both downwards and upwards in the final dough, waxy maize starch (or starch with equivalent characteristics) as a percentage of 10 to 50%, tapioca starch (or starch with similar characteristics) as a percentage of 0.50 to 10%, seed oil as a percentage of 12 to 26 wt.%.

The mixture produced in step B) is placed in a cooking/mixer machine and cold it reaches the temperature of 60°C up to 90°, preferably from 60°C to 70°C, depending on the type of characteristic that the finished cheese must have and the exact type of starches that you have chosen to use, each with a specific percentage. In the cooking phase, the starches contained, thanks to the environment that contains high percentages of water, implement the non-reversible process of gelatinization (they lose their ordered structure and take on a disordered one. Amylose and Amylopectin come into solution with water, forming bonds with it, as a result free water decreases, increasing the shelf life of the product and the viscosity of the solution). This process also implies a considerable increase in volume (about 20/30%). Cooking is carried out mixing at a number of revolutions between 500 and 4000 rpm, preferably between 500 and 3000 rpm (this speed should be calibrated according to the type of dough created and the relative viscosity obtained).

The cooking time is determined depending on the type of dough produced, on the result you want to obtain, on the amount of dough in cooking and obviously on the ability of the machine to heat the mixture, can be between 5 minutes and 30 minutes, preferably between 10 and 20 minutes.

When cooked, the dough is poured into heat-resistant molds, shapes or casings and placed inside a blaster at a temperature of -40°C, preferably -20°C for the time necessary for the internal cooling of the product (therefore proportional to the weight and shape of each shape.)

From the moment of temperature abatement, the mixtures of starches present begin their retrogradation/crystallization phase which will have a duration and a characterization given by the mixture of used starches and the related Amylose/Amylopectin ratio. (Amylose tends to recrystallize much faster than amylopectin; so the time starch takes to recrystallize depends on the amount of amylose it contains. As a result, starches rich in amylose (maize, wheat, legumes) gelatinize with more difficulty and recrystallize more easily). In fact, within 24 hours, the product will have already reached a level of crystallization appropriate to be able to consider it ready to use.

In fact, the quantities of the ingredients of step A) and B) and the proportions can be modified to obtain doughs at different textures and with many variations just working on the percentages of ingredients.

According to a preferred form of production, the process allows the realization of a high quality product using only powdered products (to which is added only water, fruit juice and oil as liquid ingredients). This form of realization allows to further optimize the costs of raw material, storage, elimination of waste and precision of quantities in the preparation of doughs.

With the exception of step A), percentages of the components mentioned in step B), and in any case in the text of the present invention refer to percentages weight by weight, i.e. the total weight of the product (obtained at the end of the preparation procedure).

The percentages of step A) are percentages by weight by weight and refer to the total weight of plant-milk.

In step A) and/or B), ingredients may be in the form as they are, i.e. may be fresh ingredients, or may be dried ingredients, powdered ingredients, dehydrated powder, etc.

According to a preferred form of production, the ingredients of the mixture of step A) and/or B) are powdered ingredients.

In step F) the product is placed in blast chillers at a temperature between -40°C and +10°C, preferably at -20°C, for the time necessary for the internal cooling of the product (therefore proportional to the weight and the shape of each shape).

The possibility to strain the product in the moulds or shapeable bags of step F), allows to produce shapes identical to traditional stretched-curd cheeses (small fresh mozzarella balls cheese, mozzarella packed for pizza or packaged mozzarella, "tied scamorze", etc).

Thanks to the use of the above mentioned specific ingredients, the finished product, if sauteed in a pan or used for baking, melts and, when pulled, stretches or forms strands of product.

The final result is in fact a product with a typically realistic appearance, absolutely comparable to other hot melting and stretching cheeses of animal origin both in texture and structure and taste, but characterized by the complete absence of both substances of animal origin (cholesterol, etc.), and, preferably, gluten. This product will integrate perfectly to be sold even within circuits typically reserved for products of animal origin (cheese counter).

The products described above as plant-based substitutes of hot melting and stretching cheese, are preferably plant-based and gluten-free products, i.e. gluten free.

All ingredients are commercially widely available.

Another object is a plant-based substitute of hot melting and stretching cheese obtainable from the above method, including any of the preferred forms of production described above.

According to a preferred form of production, the plant-based substitute of hot melting and stretching cheese obtainable from the method or plant-based substitute of hot melting and stretching cheese described above, has a gluten content between 0,001 ppm to 20 ppm. Ppm means parts per million, i.e., for example, 1 ppm means 1 mg per 1 kg of product; 20 ppm means, for example, 20 mg per kg of product; 0.001 ppm means, for example, 1 microgram per kg of product, i.e. one nanogram per gram of product.

According to a preferred form of production, the plant-based substitute of hot melting and stretching cheese is free from gluten, i.e. gluten-free, i.e. with a gluten content between 0.001 ppm and 20 ppm.

Another object is a plant-based substitute of hot melting and stretching cheese as exposed above or obtainable from the above-described method, having a gluten content between 0.001 ppm and 20 ppm.

According to a preferred form of production, the plant-based substitute of hot melting and stretching cheese obtainable from the above-described method includes a plant-based composition with a gluten content of between 0.001 ppm and 20 ppm, i.e. they are gluten-free.

According to a much preferred form of production, the plant-based substitute of hot melting and stretching cheese described above or obtainable from the above-described method includes a plant-based composition with a gluten content of between 0,001 ppm and 20 ppm.

According to a much preferred form of production, the plant-based substitute of hot melting and stretching cheese described above or obtainable from the above-described method includes a plant-based composition comprising 10 to 50 wt.% waxy maize starch and 0,5 to 10 wt.% tapioca starch, where this composition has a gluten content of between 0,001 ppm and 20 ppm.

Another object is the use of waxy corn starch and/or tapioca starch and for the preparation of a plant-based substitute of hot melting and stretching cheese.

According to a much preferred form of production, it is preferred to use 10 to 50 wt.% waxy maize starch and 0,5 to 10 wt.% tapioca starch for the preparation of a plant-based substitute of hot melting and stretching cheese.

Thanks to the use of specific starches, the finished product if baked on pizza (also very high temperatures of professional wood-fired ovens) or used for other baking or fillings, recreates the stringy structure typical of stretched-curd cheeses (similar to the traditional casein matrix of mozzarelle, scamorze or other stretched-curd cheeses) making it suitable for processing within even very complex recipes by professionals, just as real stringy cheeses would behave. Calibrating the mix of starches and of other components, the product can be made very hard and dry, ideal to be manually or mechanically crumbled, or made softer to be even cut in elastic and pleasant slices also for using raw (in tramezzini, sandwiches, etc.). In any case, if subjected to heat sources, it will become extremely stringy both superficially on pizzas or other baking preparations, and internally in flan, "botched pasta" or even fried preparations such as arancini or the "supplì on the phone" typical of Roman cuisine and characterized by an extremely stringy interior.

## Claims

1. Plant-based substitute of hot melting and stretching cheese comprising:
10 to 50 wt.% waxy maize starch,
0,5 to 10 wt.% tapioca starch,
30 to 65 wt.% plant milk.

2. Plant-based substitute of hot melting and stretching cheese according to claim 1, comprising:
10 to 38 wt.% waxy maize starch,
0,5 to 5 wt.% tapioca starch,
30 to 65 wt.% plant milk.

3. Plant-based substitute of hot melting and stretching cheese according to any of claims 1-2, also comprising one or more of the following ingredients:
- 2 to 16 wt.% fruit juice,
- 0,5 to 2 wt.% salt,
- 0,1 to 1 wt.% onion powder,
- 12 to 26 wt.% seed oil
- lactic acid enough to obtain a final pH of about 4,4.

4. Plant-based substitute of hot melting and stretching cheese according to any of claims 1-3, also comprising one or more of the following ingredients: potato starch, maize starch, rice starch, protein, yeast flakes, dried fruit, olive oil.

5. Preparing process of a plant-based substitute of hot melting and stretching cheese according to any of the claims 1 to 4, comprising the following steps:
A) fill a suitable container with 30 to 65 wt.% plant milk,
B) add under stirring the following ingredients:
2 to 16 wt.% fruit juice,
0,5 to 2 wt.% salt,
0,1 to 1 wt.% onion powder,
enough lactic acid to get a final pH of about 4,4,
10 to 50 wt.% waxy maize starch,
0,5 to 10 wt.% tapioca starch,
12 to 26 wt.% seed oil;
C) mix to achieve an homogenous mixture,
D) put the mixture from step C) in a cooking machine/mixer and heat at a temperature of 60°C to 90°C,
E) keeping the temperature reached in step D) mixing at a number of revolutions between 500 and 4000 RPM for 5 to 30 minutes,
F) fill the inside of molds and casings with the homogeneous dough of step E) and reduce the temperature of the product at a temperature of between -40°C and 10°C.

6. The method of claim 5, wherein the plant milk from step A) is prepared according the following steps:
a1) prepare a mixture comprising:
70 to 95 wt.% water,
7 to 30 wt.% cashew or dried fruit or legumes flour,
b1) emulsify by blending and cooking the product at low temperature until a mixture similar in appearance to animal milk is obtained.

7. Method according to any of claims 5-6, wherein in the step E) mixing is carried out at a number of revolutions between 500 and 3000 RPM and/or for 10 to 20 minutes.

8. Plant-based substitute of hot melting and stretching cheese obtainable from method according to any of claims 5-7.

9. Plant-based substitute of hot melting and stretching cheese according to any of claims 1-4 or according to claim 8, with a gluten content from 0,001 ppm to 20 ppm.

10. Use of waxy maize starch and/or tapioca starch and for the preparation of a plant-based substitute of hot melting and stretching cheese.

11. Use according to the claim 10, wherein it is used 10 to 50 wt.% waxy maize starch and 0,5 to 10 wt.% tapioca starch.
